# EUROPEAN PATENT APPLICATION

(11) **EP 4 501 520 A1**
(43) Date of publication of application: **05.02.2025**
(21) Application number: 24191904.2
(22) Date of filing: 30.07.2024
(51) Int. Cl.: B23K 26/00, B23K 26/14, B23K 26/38, B23K 26/70, B23K 37/04, H01M 50/50, B23K 103/10, B23K 103/12, B23K 101/36

(54) **BATTERY MANUFACTURING APPARATUS**

(30) Priority: 31.07.2023 KR 20230099746
(71) Applicant: SK On Co., Ltd., Seoul 03161 (KR)
(72) Inventor: LEE, Seul Gi, 34124 Daejeon (KR); OH, Yoon Sung, 34124 Daejeon (KR); KIM, Jae Hun, 34124 Daejeon (KR); HONG, Min Jeong, 34124 Daejeon (KR)
(74) Representative: Stolmár & Partner Patentanwälte PartG mbB

(57) **Abstract**

The present disclosure may provide a battery manufacturing apparatus including a laser cutting device irradiating a laser beam to a tab included in a battery cell, the laser beam cutting at least a part of the tab along a predetermined cutting line, and a bending device for bending at least a part of the tab.

## Description

### BACKGROUND OF THE INVENTION

### 1. Field

The present disclosure relates to a battery manufacturing apparatus and a battery manufacturing method.

### 2. Description of the Related Art

Recently, demand for mobile devices such as smartphones, tablet PCs, and wireless earphones is increasing. In addition, as the development of electric vehicles, energy storage batteries, robots, and satellites is in full swing, research is being actively conducted on high-performance secondary batteries allowing for repeated charging and discharging as an energy source.

Currently commercialized secondary batteries include nickel cadmium batteries, nickel hydrogen batteries, nickel zinc batteries, and lithium secondary batteries. Among these, lithium secondary batteries have almost no memory effect compared to nickel-based secondary batteries, allowing free charging and discharging and exhibiting very low self-discharge rates and high energy density.

In manufacturing batteries, problems may arise due to assembly tolerances. For example, it is good to minimize assembly tolerances when bending or cutting a specific component for product application. When assembly tolerances occur, problems such as short circuits, voltage differences, joint quality deterioration, cutting dispersion, and mold damage may occur.

### Prior Art Document

### Patent Document

(Patent Document 1) Korea Patent Publication: 10-2022-0136260 (Title of invention: Battery cell manufacturing method, battery cell manufacturing device)

### SUMMARY OF THE INVENTION

According to one aspect of the present disclosure, a battery manufacturing apparatus and a battery manufacturing method that can minimize problems due to assembly tolerances may be provided. In addition, specifically, according to one aspect of the present disclosure, a battery manufacturing apparatus and a battery manufacturing method that can minimize problems caused by assembly tolerances such as short circuits, voltage differences, joint quality deterioration, cutting dispersion, and mold damage may be provided. In addition, according to another aspect of the present disclosure, a battery manufacturing apparatus and a battery manufacturing method allowing for implementation of precise and diverse shapes through a laser cutting method may be provided. In addition, according to another aspect of the present disclosure, a battery manufacturing apparatus and a battery manufacturing method with improved manufacturing stability by shielding a spatter that may be caused by the laser cutting method may be provided.

A battery manufacturing apparatus and a battery manufacturing method according to one aspect of the present disclosure can be widely applied in the field of green technology, such as electric vehicles, battery charging stations, solar power generation, and wind power generation using batteries. In addition, a battery manufacturing apparatus and a battery manufacturing method according to one aspect of the present disclosure can be used in eco-friendly electric vehicles, hybrid vehicles, etc. to prevent climate change by suppressing air pollution and greenhouse gas emissions.

A battery manufacturing apparatus according to one aspect of the present disclosure may include a laser cutting device irradiating a laser beam to a tab included in a battery cell, the laser beam cutting at least a part of the tab along a predetermined cutting line; and a bending device for bending at least a part of the tab.

In a battery manufacturing apparatus according to one aspect of the present disclosure, the laser cutting device may include a laser device irradiating a laser beam, and the laser beam may include one or more selected from the group consisting of a fiber-type laser device, a disc-type laser device, and a carbon dioxide (CO₂)-type laser device.

In a battery manufacturing apparatus according to one aspect of the present disclosure, the laser beam may satisfy one or more selected from the group consisting of condition i) to condition iv) below:
condition i) spot size: 10 µm to 30 µm;
condition ii) power output: 700 W to 1,300 W;
condition iii) speed: 60 mm/s to 500 mm/s; and
condition iv) focal distance: -1.5 mm to 1.5 mm.

In a battery manufacturing apparatus according to one aspect of the present disclosure, the laser cutting device may include a gas spray device spraying a gas onto an area in which a laser beam is irradiated.

In a battery manufacturing apparatus according to one aspect of the present disclosure, a pressure of a gas sprayed by the gas spray device may be 5 bar or higher.

In a battery manufacturing apparatus according to one aspect of the present disclosure, a gas sprayed by the gas spray device may include one or more selected from the group consisting of dry air, air, nitrogen gas (N₂), oxygen gas (O₂), and argon gas (Ar).

In a battery manufacturing apparatus according to one aspect of the present disclosure, the laser cutting device may include a shielding portion shielding at least a part of the battery cell.

In a battery manufacturing apparatus according to one aspect of the present disclosure, the laser cutting device may include a pressurizing portion pressurizing the tab.

In a battery manufacturing apparatus according to one aspect of the present disclosure, the predetermined cutting line is positioned at a position spaced apart from a standard line, and the standard line is determined by a bending device.

In a battery manufacturing apparatus according to one aspect of the present disclosure, the battery cell may include an exterior material embedding an electrode assembly, and the tab may protrude from at least one side of the exterior material.

In a battery manufacturing apparatus according to one aspect of the present disclosure, the predetermined cutting line may be positioned at a position spaced apart from a standard line in a direction in which the tab protrudes.

In a battery manufacturing apparatus according to one aspect of the present disclosure, the predetermined cutting line may be positioned farther from an exterior material than the standard line.

In a battery manufacturing apparatus according to one aspect of the present disclosure, the bending device may be in contact with the tab and may bend at least a part of the tab.

In a battery manufacturing apparatus according to one aspect of the present disclosure, the standard line may be positioned on an area in which the bending device is in contact with the tab.

In a battery manufacturing apparatus according to one aspect of the present disclosure, the standard line may be positioned on the tab.

In a battery manufacturing apparatus according to one aspect of the present disclosure, the bending device may include a first bending portion provided with a protruding portion and a second bending portion provided with a recessing portion, and the protruding portion and the recessing portion may be positioned oppositely to each other.

In a battery manufacturing apparatus according to one aspect of the present disclosure, the bending device may pressurize and bend at least a part of a tab positioned between a first bending portion and a second bending portion.

A battery manufacturing method according to one aspect of the present disclosure may include a step of bending at least a part of a tab included in a battery cell and a step of cutting at least a part of the tab along a predetermined cutting line.

A battery manufacturing method according to one aspect of the present disclosure may further include a step of setting a standard line.

In a battery manufacturing apparatus according to one aspect of the present disclosure, the predetermined cutting line may be positioned at a position spaced apart from the standard line.

In a battery manufacturing apparatus according to one aspect of the present disclosure, the step of setting a standard line may be determined in the step of bending.

In a battery manufacturing apparatus according to one aspect of the present disclosure, a step of bending and a step of cutting may be performed simultaneously.

According to one aspect of the present disclosure, problems due to assembly tolerances can be minimized. In addition, specifically, according to one aspect of the present disclosure, problems caused by assembly tolerances such as short circuits, voltage differences, joint quality deterioration, cutting dispersion, and mold damage may be minimized. In addition, according to another aspect of the present disclosure, precise and diverse shapes may be implemented through a laser cutting method. In addition, according to another aspect of the present disclosure, manufacturing stability may be improved by shielding a spatter that may be caused by the laser cutting method.

### BRIEF DESCRIPTION OF THE DRAWINGS

The drawings shown in the present disclosure are based on examples of the present disclosure, and the proportions of the length, width, or thickness (or height) of each component are for detailed description of the present disclosure, and these proportions may differ from the actual proportions. In addition, in the coordinate system shown in the drawings, each axis may be perpendicular to each other, a direction pointed by an arrow may be a + direction, while a direction opposite to the direction pointed by the arrow (rotated by 180 degrees) may be a - direction.
FIGS. 1 and 2 are plan views schematically illustrating a part of a battery manufacturing apparatus according to one embodiment of the present disclosure.
FIGS. 3 to 5 are plan views schematically illustrating a part of a battery manufacturing apparatus and a part of a battery manufacturing method according to one embodiment of the present disclosure.
FIG. 6 is a photograph showing a part of a cut surface of a tab cut with a battery manufacturing apparatus according to one embodiment of the present disclosure.
FIG. 7 is a photograph showing a part of a cut surface of a tab cut under conditions different from those of one embodiment of the present disclosure.
FIG. 8 is a plan view schematically illustrating a part of a battery manufacturing apparatus and a part of a battery manufacturing method according to one embodiment of the present disclosure.
FIG. 9 is a plan view schematically illustrating a part of a bent tab according to one embodiment of the present disclosure.
FIG. 10 is a plan view schematically illustrating a structure of a battery cell in a part of a battery manufacturing method according to one embodiment of the present disclosure.
FIGS. 11 and 12 are plan views schematically illustrating a part of a battery manufacturing apparatus and a part of a battery manufacturing method according to one embodiment of the present disclosure.
FIGS. 13 and 14 are plan views schematically illustrating a part of a battery manufacturing apparatus and a part of a battery manufacturing method according to one embodiment of the present disclosure (expanded diagrams of FIG. 12A).
FIGS. 15 and 16 are plan views schematically showing a portion of a battery manufacturing apparatus and a portion of a battery manufacturing method according to one embodiment of the present disclosure.
FIG. 17 is a plan view schematically illustrating a structure of a battery cell in a part of a battery manufacturing method according to one embodiment of the present disclosure.
FIG. 18 is a perspective view schematically illustrating a part of a structure of a battery assembly according to one embodiment of the present disclosure.
FIG. 19 is a plan view schematically illustrating a part of a structure of a battery assembly according to one embodiment of the present disclosure (cross-sectional view taken along SS' of FIG. 18).
FIGS. 20 and 21 are flowcharts showing some steps of a battery manufacturing method according to one embodiment of the present disclosure.
FIG. 22 is an exploded perspective view schematically illustrating a battery module according to one embodiment of the present disclosure.
FIG. 23 is a diagram schematically illustrating a battery pack according to one embodiment of the present disclosure.

### DETAILED DESCRIPTION

Hereinafter, the present disclosure will be described in detail with reference to the attached drawings. However, this is merely illustrative, and the present disclosure is not limited to the specific embodiments described as examples.

Among the physical properties mentioned in the present specification, in cases where the measurement temperature affects the physical properties, the properties are those measured at room temperature and normal pressure, unless otherwise specified.

The term `room temperature,' as used in the present specification, is a natural temperature that is not heated or cooled, and it may refer to, for example, any temperature in the range of 10 °C to 30 °C, for example, about 15 °C or higher, about 18 °C or higher, about 20 °C or higher, about 23 °C or higher, about 27 °C or lower, or 25 °C. Unless otherwise specified in the application, the unit of temperature is Celsius (°C).

Among the physical properties mentioned in the present specification, in cases where the measured pressure affects the physical properties, unless otherwise specified, the physical properties are the physical properties measured at normal pressure.

The term 'normal pressure,' as used in the present specification, is a natural pressure that is not pressurized or depressurized, and an atmospheric pressure in the range of about 700 mmHg to 800 mmHg is typically referred to as normal pressure.

The term `a to b,' as used in the present specification, refers to within the range between a and b including a and b. For example, including a to b parts by weight has the same meaning as including within the range of a to b parts by weight.

Unless otherwise specified, the terms `length,' 'width,' and 'thickness (or height),' as used in the present application, mean average values and are measured using a measuring device capable of measuring length, width, and thickness (or height), respectively, using methods known in the art. The length, width, and thickness (or height) may mean lengths measured according to each of the axes that are perpendicular to each other in the coordinate system shown in figures.

In the present specification, the term 'battery' may be used with the same meaning as cell. In addition, the battery or cell may be a general term referring to a battery cell, which is a unit thereof, a battery assembly including the battery cell, a battery module, or a battery pack. In the above, the battery assembly may refer to a structure in which one or more battery cells are assembled with a bus bar, or a structure in which a plurality of battery cells are stacked.

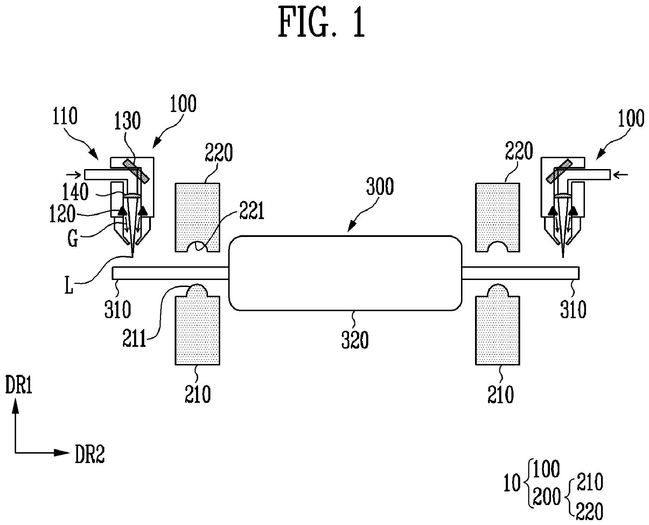

According to one aspect of the present disclosure, a battery manufacturing apparatus 10 and a battery manufacturing method that can minimize problems due to assembly tolerances may be provided. In addition, specifically, according to one aspect of the present disclosure, a battery manufacturing apparatus 10 and a battery manufacturing method that can minimize problems caused by assembly tolerances such as short circuits, voltage differences, joint quality deterioration, cutting dispersion, and mold damage may be provided. In addition, according to another aspect of the present disclosure, a battery manufacturing apparatus 10 and a battery manufacturing method allowing for implementation of precise and diverse shapes through a laser cutting method may be provided. In addition, according to another aspect of the present disclosure, a battery manufacturing apparatus 10 and a battery manufacturing method with improved manufacturing stability by shielding a spatter that may be caused by the laser cutting method may be provided (see FIG. 1).

Each component of a battery manufacturing apparatus 10 according to one aspect of the present disclosure may be automated. The term 'automation' used in the present specification may refer to performing a process of the present disclosure by operating each component included in the battery manufacturing apparatus 10 by running software such as a computer program. The battery manufacturing apparatus 10 may be appropriately connected between the components so that each component may operate organically by running the software. Each component included in the battery manufacturing apparatus 10 may include, when necessary, a transceiver device capable of transmitting and receiving electronic data generated or converted according to the software. In addition, each component included in the battery manufacturing apparatus 10 may also include, when necessary, a control portion that converts the electronic data so that each of the components operates. In addition, each component included in the battery manufacturing apparatus 10 may also include, when necessary, a storage medium capable of storing electronic data generated or converted according to the software. A method of transmitting and receiving the electronic data is not particularly limited, and any method available in the art may be applied. The storage medium may be a generally known memory device, and for example, a cache memory, a buffer memory, a disk, a hard drive, and an SSD may be applied without limitation.

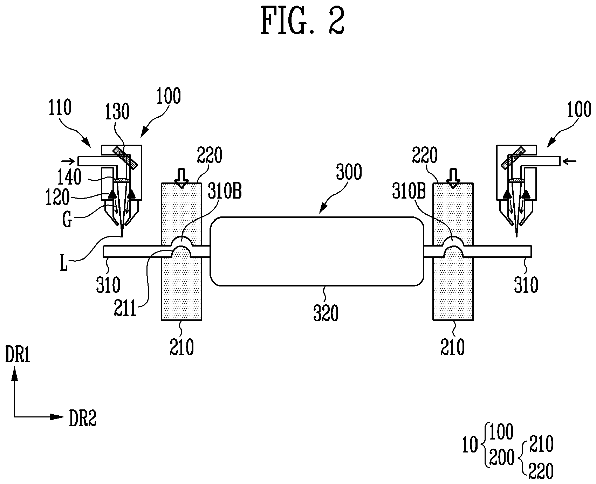

FIGS. 1 and 2 are plan views schematically illustrating a part of a battery manufacturing apparatus 10 according to one embodiment of the present disclosure.

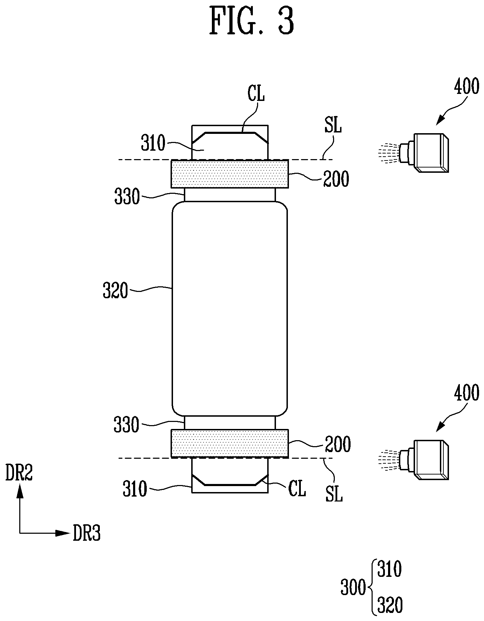

A battery manufacturing apparatus 10 according to one aspect of the present disclosure may include a laser cutting device 100. In addition, the battery manufacturing apparatus 10 may include a bending device. The laser cutting device 100 may irradiate a laser beam L to a tab 310 included in a battery cell 300. In addition, the bending device 200 may bend at least a part of the tab 310. In addition, the laser beam L may cut at least a part of the tab 310 along a predetermined cutting line CL (see FIG. 3).

In the battery manufacturing apparatus 10 according to one aspect of the present disclosure, the battery cell 300 may include a tab 310 as described above, and may further include an exterior material 320 embedding an electrode assembly. Here, the tab 310 may protrude from at least one side of the exterior material 320. It is sufficient when the battery cell 300 includes an exterior material 320 embedding an electrode assembly and a tab 310 protruding from at least one side of the exterior material 320. Depending on the case, the battery cell 300 may be in a state of a product that has undergone a formation process or may be in a state of a semi-product that has not gone through a formation process.

Meanwhile, the battery cell 300 may include one or a plurality of tabs 310. As described above, a tab 310 of the battery cell 300 may protrude from at least one side of an exterior material 320. The battery cell 300 may include a plurality of tabs 310, and protruding directions of the tabs 310 may be independent. For example, referring to FIG. 1, a battery cell 300 may have tabs 310 in the number of two, which is a plural number, and one tab 310 may protrude in a +DR2 direction, and the other tab 310 may protrude in a -DR2 direction. Here, each of the tabs 310 may protrude in opposite directions. A battery cell 300 having these directions of tabs 310 may generally be referred to as a bidirectional battery cell 300. Meanwhile, not being limited thereto, the plurality of tabs 310 may protrude in the same direction. For example, the plurality of tabs 310 may all protrude in a +DR2 direction. A battery cell 300 having this direction of tabs 310 may generally be referred to as a unidirectional battery cell 300. In a battery cell 300 according to one aspect of the present disclosure, the number of tabs 310 and a protruding direction of each thereof are not particularly limited, and the battery cell may be the above-described bidirectional battery cell 300 or unidirectional battery cell 300. In the drawings, the battery cell is illustrated as a bidirectional battery cell 300, but it may be obvious to those skilled in the art that the same may be applied to a battery cell 300 with tabs 310 protruding in different directions or a unidirectional battery cell 300.

In addition, an exterior material 320 of the battery cell 300 may embed an electrode assembly and an electrolyte. The electrode assembly may include an electrode. The electrode may include a cathode and an anode. The electrolyte may be a liquid or solid material at room temperature, and a liquid electrolyte may be referred to as an electrolyte solution, and a solid electrolyte may be referred to as a solid electrolyte. When the electrolyte is liquid at room temperature, the battery cell 300 may further include a separator between a cathode and an anode. When the electrolyte is solid at room temperature, the battery cell 300 may further include a solid electrolyte layer in the form of a layer between a cathode and an anode. The cathode refers to a reduction electrode through which an electron transfer material receives electrons when a battery cell 300 is discharged, and the anode refers to an oxidation electrode through which an electron transfer material transfers electrons when a battery cell 300 is discharged. In the above, the electron transfer material may be a lithium ion (Li⁺).

In addition, the electrode assembly may be manufactured, for example, by winding a cathode, an anode, and a separator (or a solid electrolyte layer) in the form of a sheet that is vertically long. Alternatively, the electrode assembly may be manufactured by a stacking method (e.g., Z-stacking method) in which a cathode and an anode cut into an appropriate size are inserted between separators (or solid electrolyte layers) in the form of a sheet that is vertically long

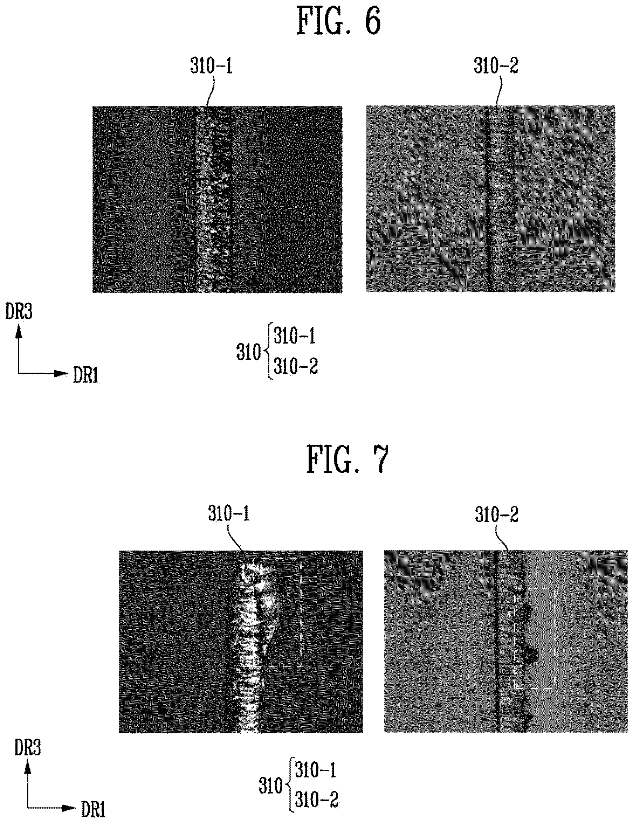

In addition, the tab 310 may be electrically connected to an electrode of the electrode assembly. Specifically, the number of the tabs 310 may be two, which is a plural number, and a cathode of an electrode assembly may be connected to one tab 310, and an anode of the electrode assembly may be connected to the other tab 310. Referring to FIG. 1, a battery cell 300 may include two tabs 310 protruding in opposite directions, one tab 310 of which may be electrically connected to a cathode of the electrode assembly, and the other tab 310 of which may be electrically connected to an anode of the electrode assembly. A tab 310 electrically connected to the cathode may be referred to as a cathode tab 310-1, and a tab 310 electrically connected to the anode may be referred to as an anode tab 310-2. A method known in the art may be used as the electrically connecting method (see FIG. 6).

In addition, the tab 310 may have an appropriate thickness. For example, the thickness of the tab 310 may be more than or equal to 0.1 mm, more than or equal to 0.11 mm, more than or equal to 0.12 mm, more than or equal to 0.13 mm, more than or equal to 0.14 mm, more than or equal to 0.15 mm, more than or equal to 0.16 mm, more than or equal to 0.17 mm, more than or equal to 0.18 mm, more than or equal to 0.19 mm, or more than or equal to 0.2 mm, or less than or equal to 2 mm, less than or equal to 1.9 mm, less than or equal to 1.8 mm, less than or equal to 1.7 mm, less than or equal to 1.6 mm, less than or equal to 1.5 mm, less than or equal to 1.4 mm, less than or equal to 1.3 mm, less than or equal to 1.2 mm, less than or equal to 1.1 mm, or less than or equal to 1 mm. The thickness of the tab 310 may be within a range formed by appropriately selecting the above-described upper and lower limits. When the thickness of the tab 310 satisfies the above-mentioned range, excellent quality of a cut surface of the tab 310 may be ensured according to conditions of a laser beam L, which will be described later. For example, the thickness of the tab 310 may mean a length along a DR1 direction in FIG. 1.

In addition, the tab 310 may include a metal. For example, the above-described cathode tab 310-1 may include aluminum (Al), and the above-described anode tab 310-2 may include copper (Cu). However, it is not limited thereto (see FIG. 6).

In the present disclosure, being electrically connected may mean a state in which connected objects are connected by a means of connection to configure an electric circuit so that a current may flow to each connected object. The means of connection is not particularly limited as long as electrical connection is possible, but it may be direct contact between connected objects or a wire through which a current may flow.

In addition, the battery cells 300 may be classified according to the shape of the exterior material 320. Depending on the shape of the exterior material 320, the battery cell 300 may be a prismatic battery cell 300, a cylindrical battery cell 300, a coin-type battery cell 300, or a pouch-type battery cell 300. For details regarding a cathode, an anode, a separator, and an electrolyte, details that are already known in the art may be referred to. The battery cell 300 illustrated in FIG. 1 is a pouch-type battery cell 300, but is not particularly limited thereto, and a battery manufacturing apparatus 10 according to one embodiment of the present disclosure may be applied when various types of battery cells 300 are manufactured.

Referring to FIG. 1, a battery manufacturing apparatus 10 according to one embodiment of the present disclosure may include a laser cutting device 100 as described above. At least a part of the laser cutting device 100 may be movable, and may be movable, for example, by being connected to a rail or the like. However, the movement of the laser cutting device 100 is not limited to the above means but may be performed in an appropriate manner in consideration of the art and the design of the battery manufacturing apparatus 10.

Referring to FIG. 1, the laser cutting device 100 may include a laser device 110 outputting a laser beam L. The laser device 110 may include a light source portion including a laser element generating a laser beam L. Specifically, cutting may be performed using a laser beam L generated from the laser element of the light source portion.

Referring to FIG. 1, the laser cutting device 100 may further include a component that is necessary to irradiate a laser beam L generated by the laser device 110 to a tab 310. For example, the laser cutting device 100 may further include a mirror 130 reflecting a laser beam L generated by the laser device 110. The path of the laser beam L may be changed through the mirror in a direction toward a tab 310. In addition, the laser cutting device may further include a lens 140 to focus a laser beam L generated by the laser device 110 and reflected by the mirror 130. Through the lens 140, the focal distance or length (spot size) of the laser beam L may be controlled to an appropriate range.

In a laser cutting device 100 according to one embodiment of the present disclosure, the type of the laser device 110 is not particularly limited as long as it may irradiate a laser beam L for cutting, and any type applied in the art may be used. For example, the laser device 110 may include one or more selected from the group consisting of a fiber-type laser device, a disk-type laser device, and a carbon dioxide (CO₂)-type laser device. In addition, the laser cutting device 100 may further include necessary components depending on the type of the laser device 110.

A laser cutting device 100 according to one embodiment of the present disclosure may cut a tab 310 in a thickness direction. Referring to FIG. 1, the laser cutting device 100 may cut at least a part of a tab 310 in a DR1 direction, which is a thickness direction.

In a laser cutting device 100 according to one embodiment of the present disclosure, a laser beam L may satisfy one, two, or three or more conditions selected from the group consisting of conditions i) to iv) described below. In another example, the laser beam L may satisfy all of conditions i) to iv) described below:
condition i) spot size: 10 µm to 30 µm;
condition ii) power output: 700 W to 1,300 W;
condition iii) speed: 60 mm/s to 500 mm/s; and
condition iv) focal distance: -1.5 mm to 1.5 mm.

Meanwhile, cutting may be performed when a laser beam L applies heat energy sufficient to cut to a tab 310, and an area of the tab 310 irradiated by the laser beam L melts.

Among the above conditions, the output and speed of a laser beam L may determine the amount of heat input required for cutting a tab 310. When the amount of heat input to the tab 310 increases, a crater may be generated, and the shape of a cut surface may become uneven due to heat damage. In addition, when the amount of heat input to the tab 310 is small, cutting may not be performed properly, and there is a possibility that a large burr may be generated. Therefore, a tab 310 may be cut to prevent the above problems from occurring by appropriately controlling the laser beam L within the range of the above-described conditions.

Among the above conditions, the focal distance of the laser beam L may also determine the amount of heat input required for cutting a tab 310. In addition, the focal distance may directly affect cutting quality of the tab 310. The spot size may vary depending on the focal distance, and as a result, the amount of heat input to a tab 310 may vary, causing problems such as poor cutting or uneven cutting. Therefore, a tab 310 may be cut to prevent the above problems from occurring by appropriately controlling the laser beam L within the range of the above-described conditions.

When the laser beam L satisfies one, two, three or more selected from the group consisting of the above-mentioned conditions i) to iv) or satisfies all of the conditions, a cross-section (cut surface) of a cut tab 310 may have excellent quality. Excellent quality of the cut surface may mean that the size of a burr generated by the laser beam L is 50 µm or less. In another example, excellent quality of the cut surface may mean that the shape of the cut surface is uniform.

Meanwhile, the laser beam L may include one or more selected from the group consisting of radio waves, microwaves, infrared rays, visible rays, and ultraviolet rays. The radio wave may refer to light having a wavelength of about 0.1 m or more to 10³ m or less. The microwave may refer to light having a wavelength of about 1 mm or more to 0.1 m or less. The infrared ray may refer to light having a wavelength of about 700 nm or more to 1 mm or less. The visible light may refer to light having a wavelength of about 380 nm or more to 700 nm or less. The ultraviolet ray may refer to light having a wavelength of about 100 nm or more to 380 nm or less.

The laser beam L may preferably include an infrared ray to ensure excellent quality of a cut surface and make the shape thereof uniform. In addition, the laser beam L may specifically include one or more selected from the group consisting of a first infrared ray and a second infrared ray. The first infrared ray may be 800 nm or more, 810 nm or more, 820 nm or more, 830 nm or more, 840 nm or more, 850 nm or more, 860 nm or more, 870 nm or more, 880 nm or more, 890 nm or more, 900 nm or more, 910 nm or more. nm or more, 920 nm or more, 930 nm or more, 940 nm or more, 950 nm or more, 960 nm or more, 970 nm or more, 980 nm or more, 990 nm or more, 1,000 nm or more, 1,010 nm or more, 1,020 nm or more, 1,030 nm or more, 1,040 nm or more, 1,050 nm or more, or 1,060 nm or more, or 2,000 nm or less, 1,900 nm or less, 1,800 nm or less, 1,700 nm or less, 1,600 nm or less, 1,500 nm or less, 1,400 nm or less, 1,300 nm or less, 1,200 nm or less, 1,100 nm or less, 1,090 nm or less, 1,080 nm or less, 1,070 nm or less, or 1,060 nm or less. The first infrared ray may have a wavelength within a range formed by appropriately selecting the above-described upper and lower limits. In addition, a second infrared ray may be 8 µm or more, 8.1 µm or more, 8.2 µm or more, 8.3 µm or more, 8.4 µm or more, 8.5 µm or more, 8.6 µm or more, 8.7 µm or more, 8.8 µm or more, 8.9 µm or more, 9 µm or more, 9.1 µm or more, 9.2 µm or more, or 9.3 µm or more, or 12 µm or less, 11.9 µm or less, 11.8 µm or less, 11.7 µm or less, 11.6 µm or less, 11.5 µm or less, 11.4 µm or less, 11.3 µm or less, 11.2 µm or less, 11.1 µm or less, 11 µm or less, 10.9 µm or less, 10.8 µm or less, 10.7 µm or less, or 10.6 µm or less. The second infrared ray may have a wavelength within a range formed by appropriately selecting the above-described upper and lower limits. In addition, when the first infrared ray and the second infrared ray have a wavelength within the above-described range, excellent quality of a cut surface may be ensured, and the shape thereof may be uniform.

In addition, in another example, the laser beam L may include the first infrared ray and the second infrared ray. Through this, excellent quality of a cut surface may be ensured, and the shape thereof may be uniform.

In addition, the amplitude and frequency of the laser beam L may be appropriately selected according to the design. In particular, the laser beam L may have a continuous wave (CW) form. That is, the laser beam L may be irradiated to a tab 310 in a form having a constant amplitude and a constant frequency.

A laser cutting device 100 according to one embodiment of the present disclosure may include a gas spray device 120. The gas spray device 120 may spray a gas G onto an area in which the laser beam L is irradiated. In addition, the gas spray device 120 may spray the gas G after the laser beam L is first irradiated. In another example, the gas injection device 120 may spray a gas G at the same time as the laser beam L is irradiated.

A gas spray device 120 may include a nozzle-like component to spray a gas G into an area in which the laser beam L is irradiated and may include a gas storage tank storing the gas G. In addition, a gas spray device may include a compressor to improve or reduce a spray pressure of the gas G. The spray pressure of the gas G may be controlled through the degree of opening and closing of the nozzle, the pressure of a gas storage tank, or the output of a compressor. However, this is only an example, and the spray pressure of the gas G may be controlled in other ways. In addition, the gas spray device 120 may further include a component necessary for spraying a gas G to an area in which the laser beam L is irradiated.

The gas spray device 120 may assist cutting by the laser beam L. The gas spray device 120 may assist the laser beam L cutting a tab 310 and improve cutting quality. That is, when a laser beam L is irradiated to a tab 310 to apply heat energy to the tab 310, and the gas G is sprayed onto an appropriately melted area of the tab 310, the melted tab 310 may be instantly cut, and thus the cutting quality may be improved.

The position of the gas spray device 120 is not particularly limited as long as it may spray a gas G to an area in which the laser beam L is irradiated. Referring to FIG. 1, the gas spray device 120 is mounted on a part of a laser device 110, but this is only an example, and the gas spray device may be provided as a separate device.

In addition, the pressure of a gas G sprayed from the gas injection device 120 may be 5 bar or more. An upper limit of the pressure of the gas G is not particularly limited, but may be, for example, 15 bar or less. The pressure of the gas G may refer to a pressure immediately after it is discharged from the gas spray device 120. In other words, the pressure of the gas G may refer to a spray pressure of the gas G. In addition, for example, when the gas G is sprayed through a nozzle, the pressure of the gas G may refer to a pressure of the gas G immediately after it is sprayed from the nozzle. In addition, the pressure of the gas G may be measured through a pressure gauge that measures the pressure of a sprayed gas or the like. When the pressure of the gas G satisfies the above range, a cut surface of excellent quality may be secured.

In addition, a gas G sprayed from the gas injection device 120 may include one or more selected from the group consisting of dry air, air (containing moisture), nitrogen gas (N₂), oxygen gas (O₂), and argon gas (Ar). The dry air may not substantially contain moisture, and specifically, the dry air may not contain moisture or, even when it does contain moisture, it may contain in 0.1% by volume or less, 0.01% by volume or less, or 0.001% by volume or less based on a total volume of the dry air. As widely known, the air may contain moisture in an appropriate ratio.

FIG. 6 is a photograph showing a part of a cut surface of a tab 310 cut with a battery manufacturing apparatus 10 according to one embodiment of the present disclosure. FIG. 7 is a photograph showing a part of a cut surface of a tab 310 cut under conditions different from those of one embodiment of the present disclosure.

Referring to FIG. 6, when the laser beam L satisfies one, two, or three or more conditions selected from the group consisting of the above-described conditions i) to iv) or satisfies all of the conditions, a cut surface of excellent quality may be ensured. In addition, when the pressure of the gas G satisfies the above-described range in addition to the conditions of the laser beam L, a cut surface of more excellent quality may be ensured. Referring to FIG. 6, the cut surfaces of both the cathode tab 310-1 and the anode tab 310-2 are excellently cut without a large burr.

Referring to FIG. 7, a cut surface of a tab 310 cut by the laser beam L out of the above-described conditions i) to iv) is shown. Referring to FIG. 7, it can be seen that both the cathode tab 310-1 and the anode tab 310-2 have a cut surface of a low quality (see the box shape in FIG. 7).

Referring to FIG. 1, a battery manufacturing apparatus 10 according to one embodiment of the present disclosure may include a bending device 200 as described above. At least a part of the bending device 200 may be movable, and may be movable, for example, by being connected to a rail or the like. However, the movement of the bending device 200 is not limited to the above means but may be performed in an appropriate manner in consideration of the art and the design of the battery manufacturing apparatus 10.

Referring to FIG. 1, the bending device 200 may bend at least a part of the tab 310. Here, bending may refer to bending to form or change a curvature. In addition, the bending device 200 may perform bending on a tab 310 in an area in which a laser beam L is not irradiated. Specifically, at least a part of the tab 310 may be cut by the laser beam L, and bending may be performed on a remaining area of the tab 310 left by the cutting.

Meanwhile, a bending method of the bending device 200 is not particularly limited as long as at least a part of the tab 310 may be bent to form or change a curvature. For example, referring to FIG. 1, the bending device 200 may include a first bending portion 210 provided with a protruding portion 211 and a second bending portion 220 having a recessing portion 221. Here, the protruding portion 211 and the recessing portion 221 may be positioned oppositely to each other. Referring to FIG. 2, the bending device 200 may be in contact with a tab 310 and bend at least a part of the tab 310. In addition, referring to FIG. 2, the bending device may pressurize and bend at least a part of a tab 310 positioned between the first bending portion 210 and the second bending portion 220. However, as described above, a bending method according to a first bending portion 210 and a second bending portion 220 shown in FIGS. 1 and 2 is only an example, and the tab 310 may be bent in other ways.

Specifically, referring to FIG. 2, the bending device 200 may bend a tab 310 as a protruding portion 211 of the first bending portion 210 is brought into contract with the tab 310 and inserted into a recessing portion 211 of the second bending portion 220. Here, the size of the protruding portion 211 may be as large as it may be inserted into the recessing portion 221 and may be determined in consideration of the degree of bending (i.e., curvature) of the tab 310. Meanwhile, referring to FIG. 2, the bending device 200 may not be in contact with an exterior material 320 of a battery cell 300 for safety reasons.

Meanwhile, at least one of the group consisting of the first bending portion 210 and the second bending portion 220 may be movable and, for example, may be movable, for example, by being connected to a rail or the like. However, the movement is not limited to the above means but may be performed in an appropriate manner in consideration of the art and the design of the battery manufacturing apparatus 10. Referring to FIG. 2, when a first bending portion 210 is fixed and a second bending portion 220 moves in a -DR1 direction, a bending area 310B may be formed on a part of a tab 310.

In addition, the position where the bending area 310B will be formed may be preset. The first bending portion 210 and the second bending portion 220 may be positioned at preset coordinates through a vision device or the like. In addition, when a first bending portion 210 and the second bending portion 220 at appropriate positions bend the tab 310, the bending device 200 may form a bending area 310B at a pre-designed position. Through the above operation, problems due to assembly tolerances may be minimized. The vision device may set coordinates based on a photographed image of at least a part of the battery manufacturing apparatus 10 photographed using a photographing device (e.g., camera, etc.). The photographed image may be two-dimensional or three-dimensional, and the coordinates that are set may also vary depending on the dimension of the photographed image. In addition, the vision device may include a control portion that sets coordinates by acquiring a photographed image as described above and converts a preset position into the set coordinates to generate position information. In addition, the vision device may transmit position information generated by the control portion to a bending device 200. The bending device 200 may be moved to an appropriate position so that a bending area 310B is formed at a preset position through the position information.

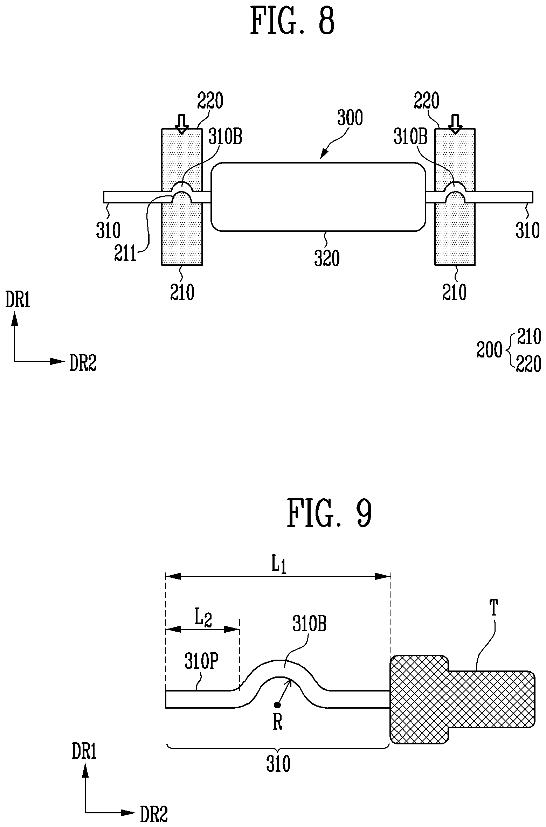

Referring to FIG. 2, the first bending portion 210 and the second bending portion 220 may pressurize a tab 310, and the tab 310 may include a bending area 310B. The curvature R of the bending area 310B may be 0.1 mm or more, 0.2 mm or more, 0.3 mm or more, 0.4 mm or more, 0.5 mm or more, or 0.6 mm or more, or 5 mm or less, 4.5 mm or less, 4 mm or less, 3.5 mm, 3 mm or less, 2.5 mm or less, or 2 mm or less (see FIG. 9). The curvature R may be within a range formed by appropriately selecting the above-described upper and lower limits. The size and shape of a protruding portion 211 of a first bending portion 210 and the size and shape of a recessing portion 221 of a second bending portion 220 may be determined so that the curvature R of the bending area 310B is formed within the above-described range. When the curvature R of the bending area 310B satisfies the above-described range, stability may be ensured by preventing damage to a battery cell 300 or the like due to external shock and vibration. The bending area 310B will be described later with reference to FIG. 9.

Meanwhile, a battery manufacturing apparatus 10 according to one embodiment of the present disclosure includes a laser cutting device 100 and a bending device 200, and cutting of a tab 310 by the laser cutting device 100 and bending of a tab 310 by the bending device 200 may be performed simultaneously. Referring to FIG. 2, the battery manufacturing apparatus 10 may simultaneously perform cutting of a tab 310 by a laser cutting device 100 and bending by a bending device 200.

The bending device 200 may be positioned closer to an exterior material 320 than a cutting line CL (see FIG. 3) predetermined by a vision device 400 based on a direction in which the tab 310 protrudes. Referring to FIG. 2, the bending device 200 may be positioned closer to an exterior material 320 than a laser cutting device 100. Specifically, referring to FIG. 2, with respect to a tab 310 protruding in a -DR2 direction, the bending device 200 may be positioned further in a +DR2 direction than a laser cutting device 100. In addition, referring to FIG. 2, with respect to a tab 310 protruding in the +DR2 direction, the bending device 200 may be positioned further in the -DR2 direction than a laser cutting device 100.

In general, cutting by the laser cutting device 100 through a laser beam L may generate a spatter. The spatter splashed onto an exterior material 320 of a battery cell 300 or, in certain cases, entered into the inside of the exterior material 320, thereby causing a safety problem.

As described above, when cutting of a tab 310 by a laser cutting device 100 and bending by a bending device 200 are performed simultaneously, when the bending device 200 is positioned closer to an exterior material 320 than the laser cutting device 100, problems caused by the spatter splashed onto the exterior material 320 or entering into the exterior material 320 may be prevented. In other words, the bending device 200 may prevent damage to a battery cell 300 caused by the spatter. In addition, the bending device 200 may have an appropriate size to prevent the spatter from damaging a battery cell 300.

FIGS. 3 to 5 are plan views schematically illustrating a part of a battery manufacturing apparatus 10 and a part of a battery manufacturing method according to one embodiment of the present disclosure.

As described above, in a battery manufacturing apparatus 10 according to one embodiment of the present disclosure, a laser cutting device 100 may irradiate the laser beam L to a tab 310 along a predetermined cutting line CL. The predetermined cutting line CL may be positioned on the tab 310.

Referring to FIG. 3, the battery manufacturing apparatus 10 may store the shape of a predetermined cutting line CL in the form of electronic data. The battery manufacturing apparatus 10 may include a computer device including a control portion to store the shape of the predetermined cutting line CL in the form of electronic data. As described above, the battery manufacturing apparatus 10 may be automated to perform a process of the present disclosure by running software such as a computer program and may include the computer device to implement this.

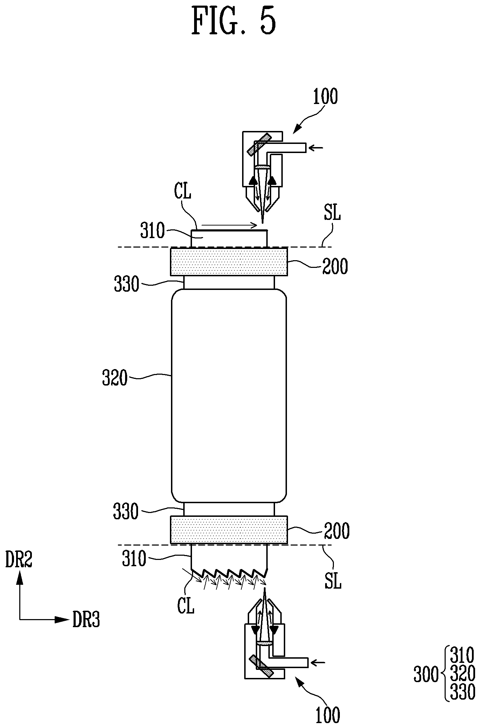

The shape of the predetermined cutting line CL is not particularly limited. For example, to cut the tab 310 in a chamfer shape as illustrated in FIG. 3, the predetermined cutting line CL may have a chamfer shape. In addition, as another example, as illustrated in FIG. 5, the predetermined cutting line CL may be a straight line or have a zigzag shape, and in the case of a bidirectional battery cell 300, predetermined cutting lines CL of individual tabs 310 may also be different. In addition, the shape of the predetermined cutting line CL is not limited to the shape illustrated in FIGS. 3 and 5, and various shapes such as a curves and a polygon may be possible. Since the predetermined shape of the cutting line CL may be implemented through a laser beam L, the various shapes described above may be possible.

Referring to FIG. 3, the battery manufacturing apparatus 10 may include a vision device 400. The predetermined cutting line CL may be moved to a preset position through the vision device 400. As will be described later, the preset position may be determined by a standard line SL. The vision device 400 may set coordinates based on a photographed image of at least a part of the battery manufacturing apparatus 10 photographed using a photographing device (e.g., camera, etc.). The photographed image may be two-dimensional or three-dimensional, and the coordinates that are set may also vary depending on the dimension of the photographed image. In addition, the vision device 400 may include a control portion that sets coordinates by acquiring a photographed image as described above and converts a preset position into the set coordinates to generate position information. In addition, the vision device may transmit position information generated by the control portion to the battery manufacturing apparatus 10 (specifically, a computer device). Accordingly, the battery manufacturing apparatus 10 may move a predetermined cutting line CL to a preset position on a tab 310. Referring to FIG. 3, the predetermined cutting line CL may have been moved to a preset position on a tab 310.

In a battery manufacturing apparatus 10 according to one embodiment of the present disclosure, the predetermined cutting line CL may be positioned at a position spaced apart from a standard line. The standard line may SL be determined by a bending device 200.

Referring to FIG. 3, the vision device 400 may set coordinates by acquiring a photographed image as described above through a control portion and set the position of the standard line SL based on the coordinates. When the vision device 400 sets the position of the standard line SL, a bending device 200 may be taken into consideration. Specifically, the standard line SL may be positioned on an area in which the bending device 200 is in contact with the tab 310 to bend the tab 310. In addition, the standard line SL may be positioned on the tab 310. Meanwhile, the battery manufacturing apparatus 10 may store the position of the standard line SL in the form of electronic data within a predetermined range on an area in which the bending device 200 is in contact with the tab 310 to bend at least a part of the tab 310.

For example, referring to FIG. 3, when the bending device 200 and the tab 310 are in contact with each other to bend the tab 310, the standard line SL may be positioned on the tab 310 in the area of contact. The position of the standard line SL may be predetermined within a range on a tab 310 in which the bending device 200 is in contact with the tab 310. The vision device 400 may define the position of the bending device 200 (a determined position in an area in contact with a tab 310) with the set coordinates and determine the position of the standard line SL based on the position of the bending device 200 defined on the coordinates. In the above, defining with the set coordinates may refer to determining the position of the bending device 200 (a determined position in an area in contact with a tab 310) based on the coordinates set by the vision device 400 by acquiring a photographed image.

Specifically, referring to FIG. 3, the standard line SL may be predetermined as an extreme end of a tab 310 in contact with the bending device 200 (i.e., a position farthest from an exterior material 320). The vision device 400 may automatically recognize (i.e., define with the set coordinates) the position of the bending device 200 and the position of an extreme end of the tab 310 in contact with the bending device 200. Through this, the vision device 400 may set an extreme end of the tab 310 in contact with the bending device 200 as a standard line SL. The battery manufacturing apparatus 10 may store the standard line SL set in this manner.

As described above, in a battery manufacturing apparatus 10 according to one embodiment of the present disclosure, the predetermined cutting line CL may be positioned at a position spaced apart from the preset standard line SL in a predetermined interval. Here, the vision device 400 may move the predetermined cutting line CL to a preset position based on the set standard line SL. Referring to FIG. 3, it can be seen that a standard line SL and a predetermined cutting line CL are positioned on each tab 310.

In the above, the spaced distance between a predetermined cutting line CL and a standard line SL is not particularly determined and may be determined according to the design of a battery cell 300. For example, the spaced distance may be designed to minimize problems caused by assembly tolerances such as short circuits, voltage differences, joint quality deterioration, cutting dispersion, and mold damage.

In addition, the positions of the predetermined cutting line CL and the standard line SL may be automatically set with the coordinates obtained from the photographed image through software embedded in a vision device 400 based on predetermined information. This method may be referred to as an auto position alignment (APA) method, through which more precise cutting of a tab 310 may be performed.

Meanwhile, referring to FIG. 3, a battery cell 300 may include a sealant 330. The sealant 330 may be formed on at least one of the tabs 310 included in the battery cell 300. The sealant 330 may close a gap between a tab 310 and an exterior material 320, thereby preventing problems such as external foreign substances from flowing into an exterior material 320. Therefore, as illustrated in FIG. 3, the sealant 330 may be provided to seal at least a part of a surface of an exterior material 320 in which a tab 310 protrudes. When the battery cell 300 includes a sealant 330, a bending device 200 may bend a tab 310 that is not in contact with the sealant 330. The bending device 200 is not in contact the sealant 330 while pressurizing it in a thickness direction (e.g., DR1 direction), but may be in contact with the tab 310 that is not in contact with the sealant 330 in a horizontal direction (e.g., DR2 direction) while bending it. In another example, the bending device 200 may not be in contact with a sealant 330.

Referring to FIG. 3, the predetermined cutting line CL may be positioned at a position spaced apart from a standard line SL in a direction in which the tab 310 protrudes. Specifically, referring to FIG. 3, with respect to a tab 310 protruding in a +DR2 direction, the predetermined cutting line CL may be positioned at a position spaced apart from a standard line SL in the +DR2 direction. In addition, referring to FIG. 3, with respect to a tab 310 protruding in a -DR2 direction, the predetermined cutting line CL may be positioned at a position spaced apart from the standard line SL in the -DR2 direction.

Referring to FIG. 3, the predetermined cutting line CL may be positioned at a position spaced apart from a standard line SL in a predetermined interval in a direction away from an exterior material 320 of a battery cell 300. In other words, referring to FIG. 3, the predetermined cutting line CL may be positioned farther from an exterior material 320 than the standard line SL.

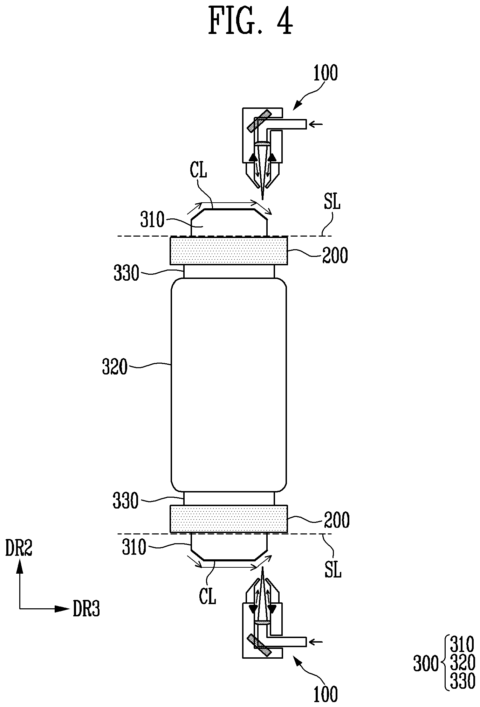

Referring to FIG. 4, a laser cutting device 100 of the battery manufacturing apparatus 10 may cut at least a part of the tab 310 along a predetermined cutting line CL of which position is determined by the vision device 400. The laser cutting device 100 may recognize position information of a predetermined cutting line CL through the vision device 400, a computer device of the battery manufacturing apparatus 10 or the like, and it may cut a tab 310 along the predetermined cutting line CL while irradiating a laser beam L to the tab 310.

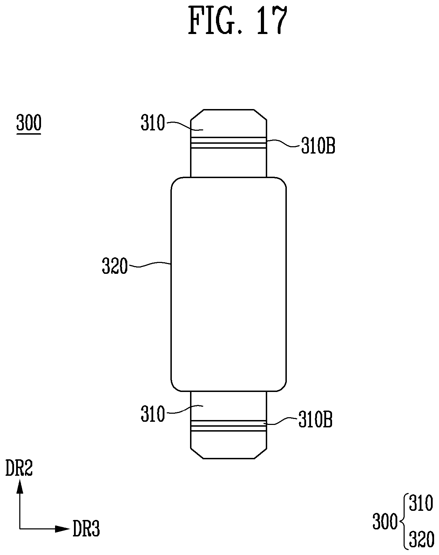

In addition, referring to FIG. 4, cutting of each tab 310 in a bidirectional battery cell 300 may be performed independently. For example, cutting of each tab 310 in the bidirectional battery cell 300 may be performed simultaneously or at different times. In addition, as shown in FIG. 4, cutting of each tab 310 may be performed independently in not only a multidirectional battery cell 300 that is not a bidirectional battery cell 300 but also a unidirectional battery cell 300. The multidirectional battery cell 300 may refer to a battery cell 300 including a plurality of tabs 310 in which the tabs 310 are not positioned opposite to each other. A battery cell 300 that has been cut as shown in FIG. 4 may ultimately have the shape illustrated in FIG. 17 (sealant 330 omitted).

Meanwhile, a battery manufacturing apparatus 10 according to one embodiment of the present disclosure may include a laser cutting device 100 and a bending device 200, and bending of a tab 310 by the bending device 200 may first performed and then cutting of the tab 310 by the laser cutting device 100 may be performed.

FIG. 8 is a plan view schematically illustrating a part of a battery manufacturing apparatus 10 and a part of a battery manufacturing method according to one embodiment of the present disclosure. As described above, in the battery manufacturing apparatus 10, bending of a tab 310 by the bending device 200 may be first performed. Referring to FIG. 8, the bending device 200 may include a first bending portion 210 and a second bending portion 220, and the first bending portion 210 and the second bending portion 220 may form a bending area 310B on a tab 310 while pressurizing the tab 310. Since detailed information regarding the bending device 200 is the same as described above, it will be omitted (see related description of FIG. 2).

FIG. 9 is a plan view schematically illustrating a part of a bent tab 310 according to one embodiment of the present disclosure. The bent tab 310 may include a bending area 310B and a protruding area 310P protruding further outward from the bending area 310B. Referring to FIG. 9, the tab 310 may protrude in a -DR2 direction, include a bending area 310B formed by the bending device 200, and include a protruding area 310P protruding further than the bending area in the -DR2 direction.

Referring to FIG. 9, at least a part of the protruding area 310P may be cut by the laser cutting device 100. In addition, a predetermined cutting line CL may be positioned on the protruding area 310P.

Referring to FIG. 9, the tab 310 may protrude from an exterior material 310 (specifically, a terrace C, which is an end of the exterior material 310) in one direction. Referring to FIG. 9, the tab 310 may protrude in a -DR2 direction.

In addition, referring to FIG. 9, the length L₁ of the tab 310 in the protruding direction (-DR2 direction) is not specifically determined and may be determined according to the design of a battery cell 300. For example, the length L₁ may be 5 mm or more, 5.1 mm or more, 5.2 mm or more, 5.3 mm or more, 5.4 mm or more, 5.5 mm or more, 5.6 mm or more, 5.7 mm or more, 5.8 mm or more, 5.9 mm or more, or 6 mm or more, or 8 mm or less, 7.9 mm or less, 7.8 mm or less, 7.7 mm or less, 7.6 mm or less, 7.5 mm or less, 7.4 mm or less, 7.3 mm or less, 7.2 mm or less, 7.1 mm or less, 7 mm or less, 6.9 mm or less, or 6.8 mm or less. The length L₁ may be within a range formed by appropriately selecting the above-described upper and lower limits. When the length L₁ is within the above-described range, problems caused by assembly tolerances such as short circuits, voltage differences, joint quality deterioration, cutting dispersion, and mold damage may be minimized.

In addition, referring to FIG. 9, the length L₂ of a protruding area 310P of the tab 310 in the protruding direction (-DR2 direction) is not specifically determined and may be determined according to the design of a battery cell 300. In other words, a battery manufacturing apparatus 10 according to one embodiment of the present disclosure may adjust a position at which a bending area 310B is formed so that the length L₂ of the protruding area 310P remains appropriately. For example, the length L₂ may be 0.5 mm or more, 0.6 mm or more, 0.7 mm or more, 0.8 mm or more, 0.9 mm or more, 1 mm or more, 1.1 mm or more, 1.2 mm or more, 1.3 mm or more, or 1.4 mm or more, or 3 mm or less, 2.9 mm or less, 2.8 mm or less, 2.7 mm or less, 2.6 mm or less, 2.5 mm or less, 2.4 mm or less, 2.3 mm or less, or 2.2 mm or less. The length L₂ may be within a range formed by appropriately selecting the above-described upper and lower limits. When the length L₂ is within the above-described range, problems caused by assembly tolerances such as short circuits, voltage differences, joint quality deterioration, cutting dispersion, and mold damage may be minimized.

As described above, the curvature R of the bending area 310B may be 0.1 mm or more, 0.2 mm or more, 0.3 mm or more, 0.4 mm or more, 0.5 mm or more, or 0.6 mm or more, or 5 mm or less, 4.5 mm or less, or 4 mm, 3.5 mm or less, 3 mm or less, 2.5 mm or less, or 2 mm or less (see FIG. 9). The length R may be within a range formed by appropriately selecting the above-described upper and lower limits. When the length R of the bending area 310B is within the above-described range, problems caused by assembly tolerances such as short circuits, voltage differences, joint quality deterioration, cutting dispersion, and mold damage may be minimized.

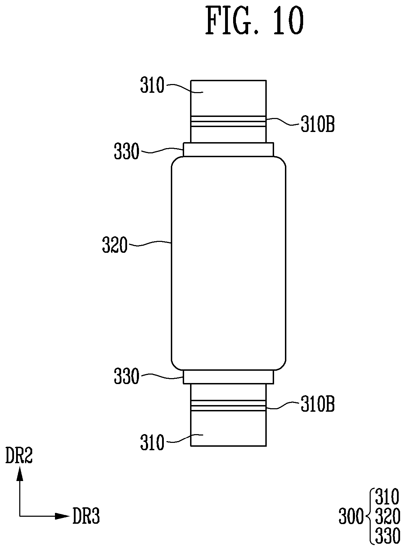

FIG. 10 is a plan view schematically illustrating a structure of a battery cell 300 in a part of a battery manufacturing method according to one embodiment of the present disclosure. Referring to FIG. 10, a bending area 310B may be formed on at least a part of each tab 310 of the battery cell 300 by a bending device 200.

As described above, in a battery manufacturing apparatus 10 according to one embodiment of the present disclosure, bending of a tab 310 by the bending device 200 may first be performed, and then cutting of the tab 310 by the laser cutting device 100 may be performed. The battery manufacturing apparatus 10 may cut at least a part of the tab 310 using a laser cutting device 100 on a battery cell 300 in which a bending area 310B is formed, as shown in FIG. 10. Here, specifically, a part of a tab 310 cut by the laser cutting device 100 may be at least a part of a protruding area 310P in FIG. 8.

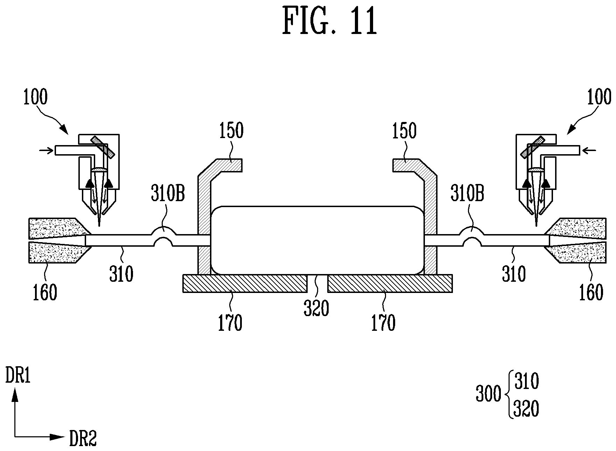

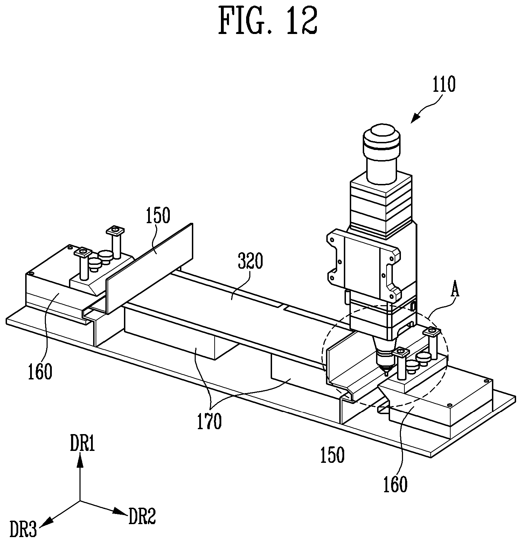

FIGS. 11 and 12 are plan views schematically illustrating a part of a battery manufacturing apparatus 10 and a part of a battery manufacturing method according to one embodiment of the present disclosure.

Referring to FIGS. 11 and 12, a battery manufacturing apparatus 10 according to one embodiment of the present disclosure may cut at least a part of a tab 310 of a battery cell 300 in which a bending area 310B is formed. In the above, a battery manufacturing apparatus 10 may first perform bending of a tab 310, and then transfer a battery cell 300 in which a bending area 310B is formed to a cutting process provided with a laser cutting device 100. The transfer method is not particularly limited, and the battery cell may be transferred, for example, through a pitch conveyor. In another example, the battery manufacturing apparatus 10 may first perform bending of a tab 310, and then, to cut a battery cell 300 in which a bending area 310B is formed, a cutting process may be performed as the laser cutting device 100 moves to the battery cell 300. The method in which bending of a tab 310 by the bending device 200 is first performed and then a process of cutting the tab 310 is performed may be carried out as described above, and when there is another appropriate method, it may be applied, and there is not a particular method that should be carried out.

Referring to FIGS. 11 and 12, a laser cutting device 100 may include a shielding portion 150 shielding at least a part of the battery cell 300. Specifically, at least a part of the battery cell 300 may refer to an area excluding a tab 310. In addition, the shielding portion 150 may shield at least a part of the battery cell 300. The shielding portion 150 may shield a spatter that may be generated by the laser cutting method. In other words, when a tab 310 is cut by the laser beam L, the shielding portion 150 may shield an area of the battery cell 300 excluding a tab 310 (e.g., exterior material 320) so that a spatter that may be generated does not spatter thereto. In addition, the shape and size of the shielding portion 150 are not particularly limited, and as described above, they are not particularly limited as long as an area of a battery cell 300 excluding a tab 310 (e.g., exterior material 320) is shielded so that a spatter does not spatter thereto.

Referring to FIGS. 11 and 12, the shielding portion 150 may be configured to shield the spatter in both a +DR1 direction and a -DR1 direction based on a tab 310. In addition, the shielding portion 150 may have a structure of an appropriate shape to shield an exterior material 320 (surface in a +DR1 direction) of a battery cell 300 from the spatter, as illustrated in FIG. 11. For example, referring to FIG. 11, the shielding portion 150 may include a bent shape, and through the bent shape, an exterior material 320 (surface in a +DR1 direction) of the battery cell 300 may be shielded from the spatter.

Referring to FIGS. 11 and 12, a laser cutting device 100 may include a pressurizing portion 160 pressurizing the tab 310. The pressurizing portion 160 may pressurize the tab 310 in a thickness direction. For example, referring to FIG. 11, a pressurizing portion 160 may fix the tab 310 by simultaneously pressurizing the tab 310 in both a +DR1 direction and a -DR1 direction (i.e., thickness direction of the tab 310). It is sufficient for the pressurizing portion 160 to pressurize with a pressurizing force sufficient to fix the tab 310, and the pressurizing force is not particularly limited.

In addition, referring to FIGS. 11 and 12, the pressurizing portion 160 may be in contact with the tab 310 at an appropriate depth and pressurizing it. The depth of the tab 310 may refer to, for example, the length along a DR2 direction. The pressurizing portion 160 may be portioned farther from an exterior material 320 than the above-described predetermined cutting line CL. In other words, the depth at which the pressurizing portion 160 is in contact with the tab 310 and pressurizes it may be determined by the predetermined cutting line CL. Therefore, the pressurizing portion 160 may fix the tab 310 before the tab 310 is cut, and then, when the tab 310 is cut along a predetermined cutting line CL by the laser cutting device 100, an area cut off from the tab 310 may be quickly separated. The pressurizing portion 160 can help ensure a cut surface of more excellent quality through this operation.

In addition, referring to FIGS. 11 and 12, the pressurizing portion 160 may be in contact with a tab 310 and pressurizing it at an appropriate length. The length of the tab 310 may refer to, for example, the length along a DR3 direction (see FIG. 12). The pressurizing portion 160 may be in contact with at least a part of the length of the tab 310 and pressurize it and in another example, may be in contact with an entire length of the tab 310 and pressurize it.

Referring to FIGS. 11 and 12, a laser cutting device 100 may include a support portion 170 supporting at least a part of a battery cell 300. The support portion 170 may be in contact with at least one surface of the battery cell 300 and supporting it and may be supporting at least a part of the one surface. In addition, the number of the support portion 170 may be one or more, or it may be a plural number or more, and the number of the support portion 170 is simply determined by design and is not particularly determined.

Referring to FIGS. 11 and 12, the battery manufacturing apparatus 10 may cut the tab 310 along a predetermined cutting line CL through a laser cutting device 100 on a battery cell in which a bending area 310B is formed, but cutting may be performed more stably by shielding a spatter that may be generated and pressurizing and fixing the tab 310 to be cut.

Meanwhile, referring to FIGS. 11 and 12, the shielding portion 150 may pressurize a tab 310 in a thickness direction. The shielding portion 150 may fix the tab 310 by simultaneously pressurizing it in both a +DR1 direction and a -DR1 direction (i.e., thickness direction of the tab 310). It is sufficient for the pressurizing portion 160 to pressurize with a pressurizing force sufficient to fix the tab 310, and the pressurizing force is not particularly limited.

Referring to FIGS. 11 and 12, the shielding portion 150 may pressurize at least a part of a surface of the battery cell 300 from which a tab 310 protrudes. Referring to FIGS. 11 and 12, the shielding portion 150 may pressurize a surface of the battery cell 300 from which a tab 310 protrudes. For example, a shielding portion 150 positioned in a -DR2 direction based on the center of an exterior material 320 may pressurize the battery cell 300 in a +DR2 direction, and a shielding portion 150 positioned in the +DR2 direction based on the center of the exterior material 320 may pressurize the battery cell 300 in the -DR2 direction Through this, problems caused by assembly tolerances such as short circuits, voltage differences, joint quality deterioration, cutting dispersion, and mold damage may be minimized to perform more precise laser cutting.

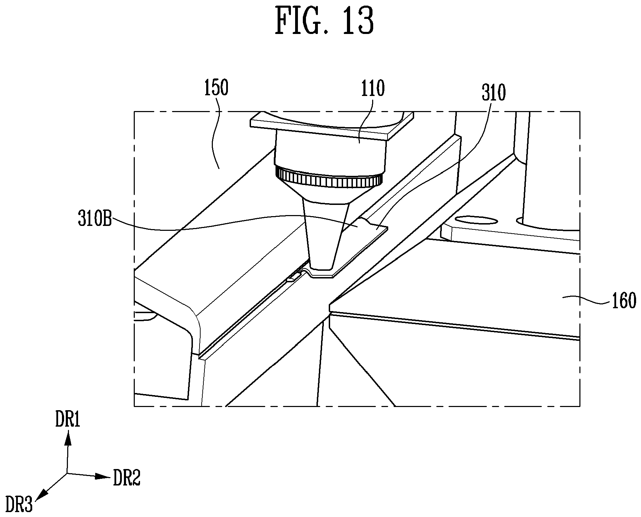

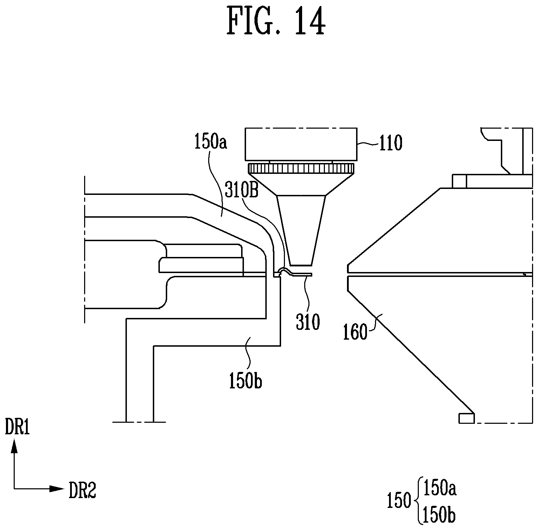

FIGS. 13 and 14 are plan views schematically illustrating a part of a battery manufacturing apparatus 10 and a part of a battery manufacturing method according to one embodiment of the present disclosure (expanded diagrams of FIG. 12A).

Referring to FIGS. 13 and 14, at least a part of a tab 310 of a battery cell 300 in which a bending area 310B is formed may be cut by a laser beam L irradiated from a laser device 110. Here, the laser device 110 may cut the tab 310 along the above-described predetermined cutting line CL.

Referring to FIGS. 13 and 14, the shielding portion 150 may be configured to shield the spatter in both a +DR1 direction and a -DR1 direction based on a tab 310. Here, a shielding portion 150 shielding a spatter in the +DR1 direction may be referred to as a first shielding portion 150a or an upper shielding portion 150a. In addition, a shielding portion 150 shielding a spatter in a -DR1 direction may be referred to as a second shielding portion 150b or a lower shielding portion 150b. The shielding portion 150 may shield at least a part of an area of a battery cell 300 excluding a tab 310 from the spatter so that a cutting process ensuring more safety is performed.

Meanwhile, referring to FIGS. 13 and 14, the shielding portion 150 may pressurize a tab 310 in a thickness direction. Referring to FIGS. 13 and 14, the shielding portion 150 may fix the tab 310 by simultaneously pressurizing it in both a +DR1 direction and a -DR1 direction (i.e. thickness direction of the tab 310), separately from a pressurizing portion 160. It is sufficient for the pressurizing portion 160 to pressurize with a pressurizing force sufficient to fix the tab 310, and the pressurizing force is not particularly limited.

Referring to FIGS. 13 and 14, the pressurizing portion 160 may be movable, for example, may be movable, for example, by being connected to a rail or the like. However, the movement is not limited to the above means but may be performed in an appropriate manner in consideration of the art and the design of the battery manufacturing apparatus 10. The pressurizing portion 160 may move to pressurize at least a part of the tab 310 in a thickness direction.

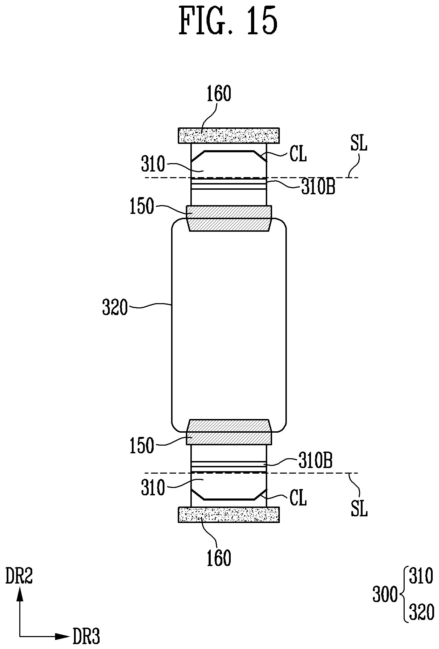

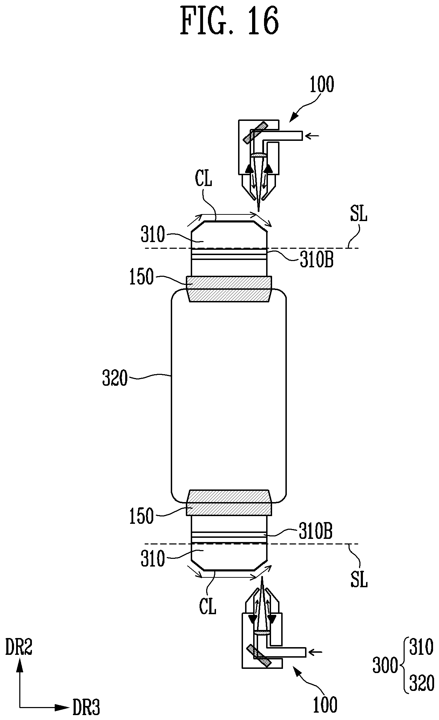

FIGS. 15 and 16 are plan views schematically showing a portion of a battery manufacturing apparatus 10 and a portion of a battery manufacturing method according to one embodiment of the present disclosure.

As described above, in the battery manufacturing apparatus 10 according to one embodiment of the present disclosure, a laser cutting device 100 may irradiate the laser beam L along a predetermined cutting line CL onto a tab 310. The predetermined cutting line CL may be positioned on the tab 310. Here, the shape of the predetermined cutting line CL and the method of moving it to a predetermined position are the same as described above, so they will be omitted hereinafter.

Referring to FIG. 15, each tab 310 of the battery cell 300 may be pressurized and fixed in a thickness direction by a pressurizing portion 160. In addition, a shielding portion 150 may be appropriately configured to shield a spatter.

Referring to FIG. 15, the predetermined cutting line CL may be positioned at a position spaced apart from a standard line SL. The standard line SL may be determined by a bending device 200. Specifically, referring to FIG. 15, the standard line SL may be positioned within a bending area 310B of a tab 310. In other words, the position of the standard line SL may be predetermined within the bending area 310B formed by the bending device 200. The above-described vision device 400 (see FIG. 3) may define the position of the bending area 310B with the set coordinates and set the standard line SL based on the position of the bending area 310B defined with the coordinates. In the above, defining with the set coordinates may refer to determining the position of the bending area 310B based on the coordinates set by the vision device 400 by acquiring a photographed image. In addition, specifically, referring to FIG. 15, the standard line SL may be predetermined at an extreme end of the bending area 310B (i.e., position farthest from an exterior material 320). The vision device 400 may automatically recognize the position of a bending area 310B and the extreme end position of the bending area 310B (i.e. able to define with the set coordinates). Through this, the vision device 400 may set an extreme end of the bending area 310B as a standard line SL. The battery manufacturing apparatus 10 may store a standard line SL set in this way.

As described above, in the battery manufacturing apparatus 10 according to one embodiment of the present disclosure, the predetermined cutting line CL may be positioned at a position spaced apart from the set standard line SL in a predetermined interval. Here, the vision device 400 may move the predetermined cutting line CL to a preset position based on the set standard line SL. Referring to FIG. 15, it can be seen that a standard line SL and a predetermined cutting line CL are positioned on each tab 310.

In the above, the spaced distance between a predetermined cutting line CL and a standard line SL is not particularly determined and may be determined according to the design of a battery cell 300. For example, the spaced distance may be designed to minimize problems caused by assembly tolerances such as short circuits, voltage differences, joint quality deterioration, cutting dispersion, and mold damage.

In addition, the positions of the predetermined cutting line CL and the standard line SL may be automatically set with the coordinates obtained from the photographed image through software embedded in a vision device 400 based on predetermined information. This method may be referred to as an auto position alignment (APA) method, through which more precise cutting of a tab 310 may be performed.

Referring to FIG. 15, the predetermined cutting line CL may be positioned at a position spaced apart from a standard line SL in a direction in which the tab 310 protrudes. Specifically, referring to FIG. 15, with respect to a tab 310 protruding in a +DR2 direction, the predetermined cutting line CL may be positioned at a position spaced apart from a standard line SL in the +DR2 direction. In addition, referring to FIG. 15, with respect to a tab 310 protruding in a -DR2 direction, the predetermined cutting line CL may be positioned at a position spaced apart from the standard line SL in the -DR2 direction.

Referring to FIG. 15, the predetermined cutting line CL may be positioned at a position spaced apart from a standard line SL in a predetermined interval in a direction away from an exterior material 320 of a battery cell 300. In other words, referring to FIG. 15, the predetermined cutting line CL may be positioned farther from an exterior material 320 than the standard line SL.

Meanwhile, referring to FIG. 15, the pressurizing portion 160 may be positioned at a position spaced apart from a predetermined cutting line CL in a direction in which the tab 310 protrudes. Specifically, referring to FIG. 15, with respect to a tab 310 protruding in a +DR2 direction, the pressurizing portion 160 may be positioned at a position spaced apart from a predetermined cutting line CL in the +DR2 direction. In addition, referring to FIG. 15, with respect to a tab 310 protruding in a -DR2 direction, the pressurizing portion 160 may be positioned at a position spaced apart from a predetermined cutting line CL in the -DR2 direction

Referring to FIG. 15, the pressurizing portion 160 may be positioned at a position spaced apart from a predetermined cutting line CL in a predetermined interval in a direction away from an exterior material 320 of a battery cell 300. In other words, referring to FIG. 15, the pressurizing portion 160 may be positioned farther from an exterior material 320 than the standard line SL.

Referring to FIG. 16, a laser cutting device 100 of the battery manufacturing apparatus 10 may cut at least a part of the tab 310 along a predetermined cutting line CL of which position is determined by the vision device 400. The laser cutting device 100 may recognize position information of a predetermined cutting line CL through the vision device 400, a computer device of the battery manufacturing apparatus 10 or the like, and it may cut a tab 310 along the predetermined cutting line CL while irradiating a laser beam L to the tab 310.

In addition, referring to FIG. 16, as described above, the shielding portion 150 may shield a spatter that may be generated by the cutting.

In addition, referring to FIG. 16, cutting of each tab 310 in a bidirectional battery cell 300 may be performed independently. For example, cutting of each tab 310 in the bidirectional battery cell 300 may be performed simultaneously or at different times. In addition, as shown in FIG. 16, cutting of each tab 310 may be performed independently in not only a multidirectional battery cell 300 that is not a bidirectional battery cell 300 but also a unidirectional battery cell 300. The multidirectional battery cell 300 may refer to a battery cell 300 including a plurality of tabs 310 in which the tabs 310 are not positioned opposite to each other. A battery cell 300 that has been cut as shown in FIG. 16 may ultimately have the shape illustrated in FIG. 17.

FIG. 17 is a plan view schematically illustrating a structure of a battery cell 300 in a part of a battery manufacturing method according to one embodiment of the present disclosure. Referring to FIG. 17, a bending process and a cutting process may be performed on a tab 310 of the battery cell 300 through a battery manufacturing apparatus 10 according to one embodiment of the present disclosure. Specifically, referring to FIG. 17, both ends of each tab 310 may have the appearance of being cut through a laser beam, and the appearance of being cut may be determined according to an above-described predetermined cutting line CL. In addition, referring to FIG. 17, each tab 310 may include a bending area 310B formed by a bending device 200.

Referring to FIG. 17, a battery cell 300 in which a tab 310 is processed through a battery manufacturing apparatus 10 according to one embodiment of the present disclosure may be provided. By performing the processing of the tab 310 using a battery manufacturing apparatus 10 and according to a battery manufacturing method, which will be described later, precise and diverse shapes may be implemented through a laser cutting method.

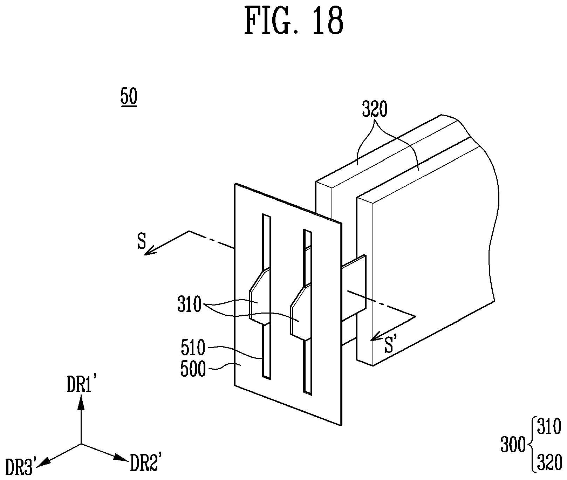

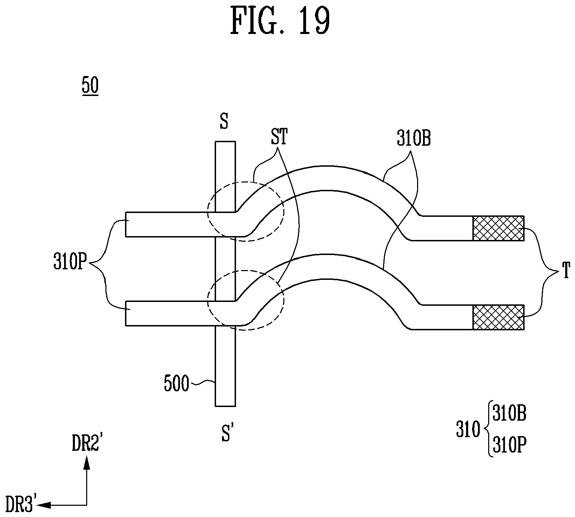

FIG. 18 is a perspective view schematically illustrating a part of a structure of a battery assembly 50 according to one embodiment of the present disclosure. FIG. 19 is a plan view schematically illustrating a part of a structure of a battery assembly 50 according to one embodiment of the present disclosure (cross-sectional view taken along SS' of FIG. 18).

In the above, as described above, a battery assembly 50 may refer to a structure in which one or more battery cells 300 are assembled with a bus bar 500, or a structure in which a plurality of battery cells 300 are stacked. The plurality of battery cells 300 may be stacked along one direction through an adhesion means such as an adhesive pad or double-sided tape. At this time, the plurality of stacked battery cells 300 may be in contact with adjacent battery cells 300 or may not be in contact with each other. In addition, as for the plurality of stacked battery cells 300, only some of the adjacent battery cells 300 may be in contact with each other, and others may not be in contact with each other.

In addition, a stacking direction of the battery cells 300 may refer to a direction in which surfaces having the largest area of a main chamber face each other. In the above, a main chamber may refer to an area in which an electrode assembly is included in an exterior material 320 in a battery cell 300 excluding a tab 310. Referring to FIG. 18, the stacking direction may be a DR2' direction. The number of battery cells 300 included in the battery assembly 50 is not particularly limited and may be appropriately selected as needed.

Referring to FIG. 18, a battery assembly 50 according to one embodiment of the present disclosure may include a battery cell 300 and a bus bar 500. Here, the battery cell 300 may refer to a battery cell 300 in a state in which a tab 310 has been processed using a battery manufacturing apparatus 10 according to one embodiment of the present disclosure.

Referring to FIG. 18, the bus bar 500 may include a bus bar hole 510 into which at least a part of a tab 310 of the battery cell 300 may be inserted. The size (length, width, thickness, etc.) of the bus bar hole 510 may be designed to match the size (length, width, thickness, etc.) of the tab 310 to be inserted. In addition, the number of the bus bar holes 510 may be determined depending on the number of tabs 310 protruding from one surface of the individual battery cells 300, the number of battery cells 300, or the like. The number of the bus bar holes 510 may be greater than or equal to the total number of the tabs 310 protruding from one side. Referring to FIG. 18, two battery cells 300 are provided, and each battery cell 300 has one tab 310 protruding from one surface. Continuously referring to FIG. 18, there are two bus bar holes 510, and each one of the tabs 310 protruding from one surface of the two battery cells 300 may each be inserted into the bus bar holes 510.

Meanwhile, referring to FIG. 18, the number of the bus bars 500 may be determined by in consideration of the shape of a battery cell 300, the number of tabs 310, the protruding direction of the tabs 310, and the like. The bus bar 500 may be designed with an appropriate shape and number based on the battery cell 300 and the like.

In addition, referring to FIG. 18, the tab 310 may be inserted through the bus bar hole 510, and the bus bar hole 510 may be a through-hole. Meanwhile, for safety reasons, each of the tabs 310 may be inserted into one or more bus bar holes 510. Two or more tabs 310 may not be inserted into one busbar hole 510. At least a part of a tab 310 inserted into the bus bar hole 510 may be welded in contact with a part of a surface of the bus bar 500, but not limited thereto.

Referring to FIG. 19, a tab 310 may include a bending area 310B and a protruding area 310P. The protruding area 310P may be in a state of being at least partially cut off compared to that shown in FIG. 9 described above. Referring to FIG. 19, a tab 310 may not entirely pass through a bus bar 500 but only a part of the tab 310 may pass through the bus bar 500 due to the bending area 310B. As a stopper area ST of the bending area 310B is brought into contact with a bus bar 500, the tab 310 may no longer pass through the bus bar 500. A tab 310 of a battery cell 300 may be processed using a battery manufacturing apparatus 10 according to one embodiment of the present disclosure, and through this, problems caused by assembly tolerances such as short circuits, voltage differences, joint quality deterioration, cutting dispersion, and mold damage may be minimized.

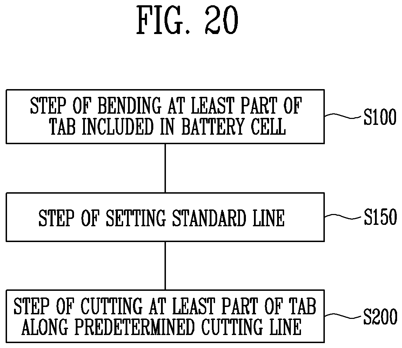

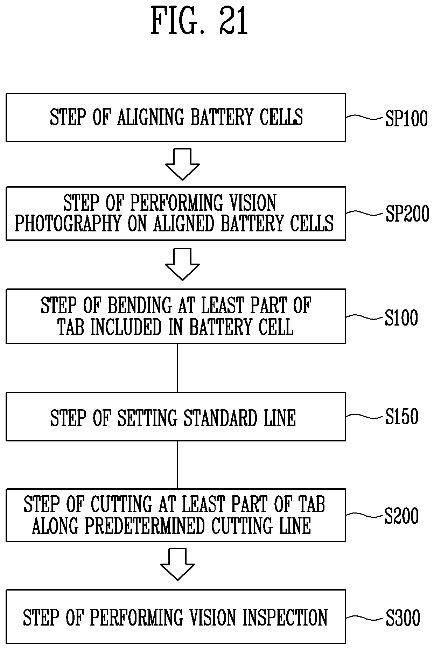

FIGS. 20 and 21 are flowcharts showing some steps of a battery manufacturing method according to one embodiment of the present disclosure. The content to be described later only describes operation sequence or the like of a battery manufacturing apparatus 10 according to one embodiment of the present disclosure described above, and the principles and methods of the battery manufacturing method are the same as those described about the battery manufacturing apparatus 10, which may be referred to.

Referring to FIG. 20, a battery manufacturing method 10 according to one embodiment of the present disclosure may include a step of bending S 100 at least a part of a tab 310 included in a battery cell 300 and a step of cutting S200 at least a part of the tab along a predetermined cutting line. Here, the step of bending S100 and the step of cutting S200 may be performed simultaneously or at different times. In addition, a sequence of the operations among the step of bending S 100 and the step of cutting S200 may not be determined in advance. For example, the step of bending S100 may be performed first, and then the step of cutting S200 may be performed. In another example, the step of cutting S200 may be performed first, and then the step of bending S 100 may be performed.

In a battery manufacturing method according to one embodiment of the present disclosure, in a case where the step of bending S100 and the step of cutting S200 are performed simultaneously, reference may be made to the battery manufacturing apparatus 10 according to one embodiment of the present disclosure described through FIGS. 1 to 5. In addition, in a case where the step of bending S 100 and the step of cutting S200 are performed at different times, reference may be made to the battery manufacturing apparatus 10 according to one embodiment of the present disclosure described through FIGS. 8 to 16.

Referring to FIG. 20, a battery manufacturing method according to one embodiment of the present disclosure may further include a step of setting a standard line SL S150. Here, the step of bending S100, the step of setting a standard line S 150, and the step of cutting S200 may be performed simultaneously or at different times. In addition, a sequence of individual operations may not be determined in advance. For example, the step of bending S100 may be first performed, and then the step of setting a standard line S150, after which the step of cutting S200 may be performed. In addition, as described above, a predetermined cutting line CL may be positioned at a position spaced apart from the standard line SL. Regarding a method of setting the predetermined cutting line CL and the standard line SL, reference may be made to the contents described above based on FIGS. 3 to 5 and FIGS. 15 to 17.

Meanwhile, in a battery manufacturing method according one an embodiment of the present disclosure, the step of setting a standard line SL S 150 may be determined in the step of bending S 100. In other words, the step of setting a standard line SL S150 may be performed after the step of bending S 100 is performed. In the above, the meaning of the description that the step of setting a standard line SL S150 may be determined in the step of bending S 100 has the same meaning as the description that the standard line SL is determined by a bending device 200 of the battery manufacturing apparatus 10. Regarding the step of setting a standard line SL S150 determined in the step of bending S100, reference may be made to the contents described above based on FIG. 3.

Referring to FIG. 21, a battery manufacturing method according to one embodiment of the present disclosure may include a step of aligning battery cells 300 SP100. In the step of aligning battery cells 300 SP100, the positions of the battery cells 300 themselves may be aligned using an air cylinder or the like. In addition, the step of aligning battery cells 300 SP100 may be a step of aligning with the air cylinder or the like based on the datum of the battery cells 300. The datum of the battery cells 300 may be determined based on, for example, a remaining area excluding a tab 310 of the battery cell 300 based on a plane visible along DR2 and DR3 (see FIG. 3), but is not limited thereto.

Referring to FIG. 21, a battery manufacturing method according to one embodiment of the present disclosure may include a step of performing vision photography on the aligned battery cells 300 SP200. The step of performing vision photography SP200 may be performed after the step of aligning battery cells 300 SP100 is performed. To set the predetermined cutting line CL or standard line SL, and the like or to set a position for a bending device 200 to come into contact with a tab 310, a photographed image may be acquired through a vision device 400, and coordinates may be set. The above operation may be performed on battery cells 300 aligned in the step of performing vision photography SP200, but is not limited thereto.

Meanwhile, the step of performing vision photography SP200 may be performed at any time when necessary throughout a battery manufacturing method according to one embodiment of the present disclosure.

Referring to FIG. 21, a battery manufacturing method according to one embodiment of the present disclosure may include a step of performing vision inspection S300 on a battery cell 300 in which bending and cutting have been performed. The battery cell 300 in which bending and cutting have been performed may specifically refer to a battery cell 300 in which at least a part of a tab 310 of the battery cell 300 has been bent and cut. The step of performing vision inspection S300 may be a step in which conditions of a cut surface of the tab 310, a curvature R of a bending area 310B, and the like may be confirmed through a photographed image. The step of performing vision inspection S300 may further include a step of determining through a derived photographed image that a product is a good product when conditions of a cutting surface of the tab 310, a curvature R of a bending area 310B, and the like meet predetermined criteria, and it may further include a step of determining that a product is a defective product when the predetermined criteria are not met, but is not limited thereto.

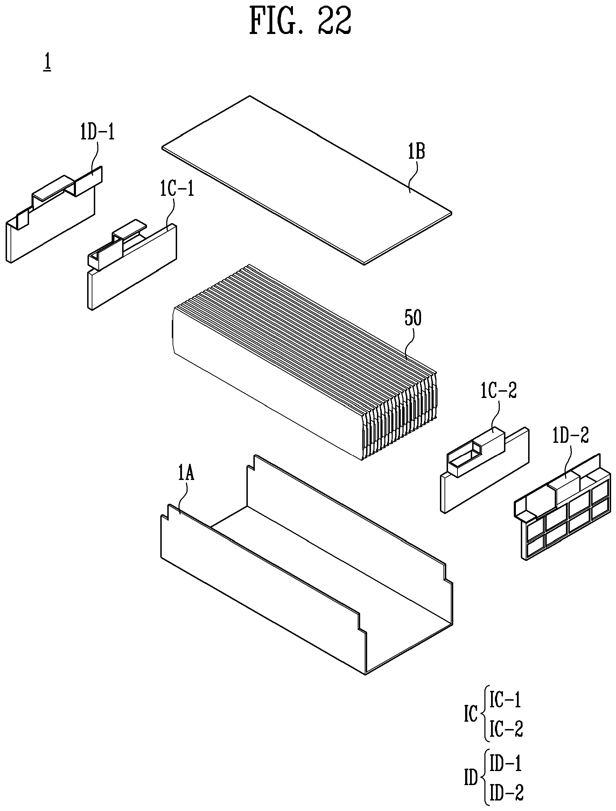

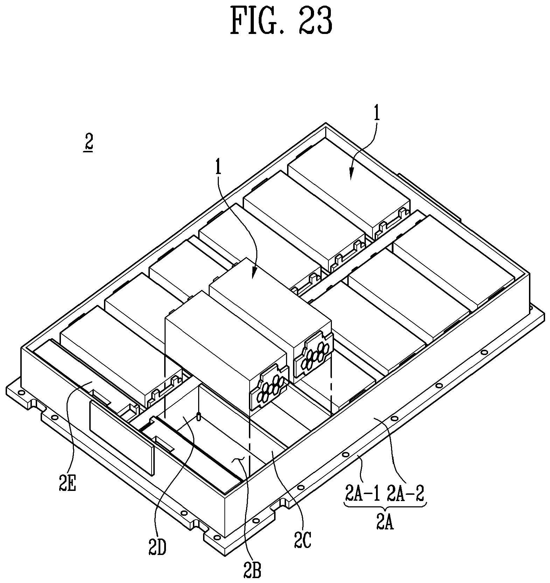

FIG. 22 is an exploded perspective view schematically illustrating a battery module 1 according to one embodiment of the present disclosure. FIG. 23 is a diagram schematically illustrating a battery pack 2 according to one embodiment of the present disclosure.

The structure of a battery module 1 according to one embodiment of the present disclosure may be a known structure. Referring to FIG. 22, the battery module 1 may include a battery assembly 50 according to one embodiment of the present disclosure, a module housing 1A, a module top cover 1B, an inner side cover 1C, and an outer side cover 1D. The battery assembly 50 may include one or more battery cells 300, and a tab 310 of the battery cell 300 may be inserted into a bus bar hole 510 of a bus bar 500 and then appropriately welded (see FIG. 18). In addition, the tab 310 may be electrically connected to a bus bar 500 through the welding. The welding method may a known method.

Referring to FIG. 22, the battery assembly 50 may be placed in a housing space of a module housing 1A, and to protect the battery assembly 50 from external shock and vibration, the battery assembly 50 may be covered with a module top cover 1B, an inner side cover 1C, and an outer side cover 1D. Here, the inner side cover 1C may be one or plural to protect an area where a tab 310 protrudes in the battery assembly 50, and referring to FIG. 22, to protect an area where a tab 310 protrudes, the inner side cover 1C may include a first inner side cover 1C-1 and a second inner side cover 1C-2. In addition, referring to FIG. 22, the outer side cover 1D may include a first outer side cover 1D-1 covering the first inner side cover 1C-1 once more and a second outer side cover 1D-2 covering the second inner side cover 1C-2 once more. However, this is only an exemplary structure, and a person skilled in the art may appropriately change the structure of the battery module 1.

The structure of a battery pack 2 according to one embodiment of the present disclosure may be a known structure. Referring to FIG. 23, the battery pack 2 may include a pack housing 2A including a housing bottom surface 2A-1 and a housing side surface 2A-2. The pack housing 2A may include a cooling plate to dissipate heat generated by the battery pack 2. In addition, referring to FIG. 23, the battery pack 2 may include a module embedding space 2B formed inside the pack housing 2A, and the module embedding space 2B may be provided with the above-described battery module 1 and an electronic component portion 2E including various control devices such as a battery management system (BMS).

Referring to FIG. 23, the battery pack 2 may further include several components to ensure structural rigidity of a pack housing 2A. The battery pack 2 may include a cross member 2D that is formed to protrude from the housing bottom surface 2A-1 while crossing an interior of a pack housing 2A (module interior space, 2B). In addition, the battery pack 2 may further include a side wall 2C further partitioning a space partitioned by a cross member 2D appropriately according to the size of the battery module 1. In some cases, there may be one or multiple cross members 2D and side walls 2C.

Meanwhile, the battery pack 2 may directly include a battery cell 300 or a battery assembly 50 rather than the battery module 1, and in this case, the battery pack 2 may be referred to as a cell-to-pack battery pack. A battery pack 2 according to one embodiment of the present disclosure may be a cell-to-pack battery pack as described above.

An electric device according to one embodiment of the present disclosure may include one or more selected from the group consisting of a battery module 1 and a battery pack 2 according to one embodiment of the present disclosure. The electric device may refer to a device that operates using power generated from a battery module 1 or a battery pack 2. The electric device may be, for example, a mobile phone, home appliance, electric vehicle, hybrid vehicle, or energy storage system (ESS).

The content described above is merely an example of applying the principles of the present disclosure, and other components may be further included without departing from the scope of the present disclosure.

## Claims

1. A battery manufacturing apparatus comprising:
a laser cutting device irradiating a laser beam to a tab included in a battery cell, the laser beam cutting at least a part of the tab along a predetermined cutting line; and
a bending device for bending at least a part of the tab.

2. The battery manufacturing apparatus according to claim 1, wherein the laser cutting device includes a laser device irradiating a laser beam, wherein the laser beam includes one or more selected from the group consisting of a fiber-type laser device, a disc-type laser device, and a carbon dioxide (CO₂)-type laser device.

3. The battery manufacturing apparatus according to any one of the preceding claims, wherein the laser beam satisfies one or more selected from the group consisting of condition i) to condition iv) below:
condition i) spot size: 10 µm to 30 µm;
condition ii) power output: 700 W to 1,300 W;
condition iii) speed: 60 mm/s to 500 mm/s; and
condition iv) focal distance: -1.5 mm to 1.5 mm.

4. The battery manufacturing apparatus according to any one of the preceding claims, wherein the laser cutting device includes a gas spray device spraying a gas onto an area in which a laser beam is irradiated.

5. The battery manufacturing apparatus according to claim 4, wherein a pressure of a gas sprayed by the gas spray device is 5 bar or higher.

6. The battery manufacturing apparatus according to claim 4, wherein a gas sprayed by the gas spray device includes one or more selected from the group consisting of dry air, air, nitrogen gas (N₂), oxygen gas (O₂), and argon gas (Ar).

7. The battery manufacturing apparatus according to any one of the preceding claims, wherein the laser cutting device includes a shielding portion shielding at least a part of the battery cell.

8. The battery manufacturing apparatus according to any one of the preceding claims, wherein the laser cutting device includes a pressurizing portion pressurizing the tab.

9. The battery manufacturing apparatus according to any one of the preceding claims, wherein the predetermined cutting line is positioned at a position spaced apart from a standard line, wherein the standard line is determined by a bending device.

10. The battery manufacturing apparatus according to claim 9, wherein the battery cell includes an exterior material embedding an electrode assembly, the tab protrudes from at least one side of the exterior material, and the predetermined cutting line is positioned at a position spaced apart from a standard line in a direction in which the tab protrudes.

11. The battery manufacturing apparatus according to claim 10, wherein the predetermined cutting line is positioned farther from an exterior material than the standard line.

12. The battery manufacturing apparatus according to claim 9 or 10, wherein the bending device is in contact with the tab and bends at least a part of the tab.

13. The battery manufacturing apparatus according to claim 12, wherein the standard line is positioned on an area in which the bending device is in contact with the tab.

14. The battery manufacturing apparatus according to claim 13, wherein the standard line is positioned on the tab.

15. The battery manufacturing apparatus according to any one of the preceding claims, wherein the bending device includes a first bending portion provided with a protruding portion and a second bending portion provided with a recessing portion, wherein the protruding portion and the recessing portion are positioned oppositely to each other.
